# EUROPÄISCHE PATENTSCHRIFT

(11) **EP 3 908 388 B1**
(45) Veröffentlichungstag und Bekanntmachung des Hinweises auf die Patenterteilung: **26.06.2024**
(21) Anmeldenummer: 20700430.0
(22) Anmeldetag: 07.01.2020
(51) Int. Cl.: B01D 29/01, B01D 46/00, B01D 46/10

(54) **VERFAHREN ZUM VERBINDEN EINES FILTERS MIT EINEM BAUTEIL**
PROCESS OF JOINING A FILTER TO A STRUCTURAL MEMBER
PROCEDE DE JOINDRE UN FILTRE A UN COMPOSANT

(30) Priorität: 09.01.2019 DE 102019200188
(43) Veröffentlichungstag der Anmeldung: 17.11.2021
(73) Patentinhaber: KNORR-BREMSE Systeme für Nutzfahrzeuge GmbH, 80809 München (DE)
(72) Erfinder: DEEG, Markus, 71735 Eberdingen (DE); GRASS, Simon, 73268 Erkenbrechtsweiler (DE); SÖHNLEIN, Julian, 71701 Schwieberdingen (DE); EISENBERGER, Andreas, 72622 NÜRTINGEN (DE)
(86) Internationale Anmeldenummer: PCT/EP2020/050201
(87) Internationale Veröffentlichungsnummer: WO 2020/144176

(56) Entgegenhaltungen:
- WO-A1-2016/203225
- CN-A- 103 370 134
- DE-A1-102015 218 183
- US-A- 5 512 172
- US-B1- 6 364 978

## Beschreibung

Die Erfindung betrifft ein Verfahren zum Verbinden eines Filtermaterials mit einem fluidtechnischen Bauteil, insbesondere ein Verfahren die im Bereich von Fahrzeugen verwendet werden.

Insbesondere in Fahrzeugen mit Pneumatiksystemen für Brems- oder Federungssysteme werden zur Vermeidung von Verschmutzungen von Sensoren, Magnetventilen, Kolben, Dichtmanschetten, Membranen etc. in den Pneumatiksystemen Filter eingesetzt. Ein in Strömungsrichtung der Luft erster Filter in den Pneumatiksystemen ist üblicherweise ein Hauptluftfilter, beispielsweise ein Ansaugluftfilter oder ein Luftfilter in einem Vierkreisschutzventil. Um Verschmutzungen, die stromabwärts von dem Hauptfilter entstehen, aufzufangen, werden dann oft Filter eingesetzt, die direkt an einem jeweiligen Modul oder dem Magnetventil sitzen. Dadurch werden auch Verschmutzungspartikel aufgehalten, die bei der Montage entstehen, oder Flitter, Abplatzungen und Grate, die im Inneren von Pneumatikleitungen entstehen. Diese Filter werden auch benötigt, um sogenannte "in-built"-Partikel aufzuhalten.

Solche Filter werden in die Bauteile, beispielsweise die Module oder die Magnetventile, eingeclipst, eingeschraubt oder in Kunststoffbauelement, die dann als Filter eingesetzt werden, eingespritzt. Die Filter sind also als ein Zusatzteil zu montieren oder müssen, wenn sie eingespritzt werden, als Einlegeteil in ein Kunststoffspritzwerkzeug eingelegt werden, was beides kostenintensiv ist. Grundsätzlich entstehen also durch die Filterung Mehrkosten. Wenn darüber hinaus Einzelteile verwendet werden, die mit Filterung und ohne Filterung benötigt werden, dann müssen, beispielsweise falls der Filter eingespritzt wird, zwei Bauteilenummern vergeben werden, die dann mit dem entsprechenden Aufwand für Lagerung, Beschaffung, etc. verbunden sind, da es ein

Bauteil mit Filter und ein Bauteil ohne Filter gibt. CN 103 370 134 A, US 6 364 978 B1, US 5 512 172 A, DE 10 2015 218183 A1 und WO 2016/203225 A1 offenbaren relevante Verfahren für die vorliegende Erfindung.

Der Erfindung liegt also die Aufgabe zugrunde, ein Verfahren bereitzustellen, die die obigen Nachteile beseitigen, und ein Verfahren bereitzustellt, die eine Filterung flexibel und kostengünstig bereitstellen.

Die Aufgabe wird durch ein Verfahren gemäß Anspruch 1 gelöst. Vorteilhafte Weiterentwicklungen sind in dem abhängigen Anspruch enthalten.

Gemäß einem Aspekt der Erfindung enthält ein Verfahren zum Verbinden eines Filtermaterials mit einem fluidtechnischen Bauteil den Schritt eines Verbindens des Filtermaterials mit dem fluidtechnischen Bauteil mittels eines stoffschlüssigen Verbindungsverfahrens.

Durch das stoffschlüssige Verbindungsverfahren besteht die Möglichkeit, eine Filterung eines Fluids, das in das fluidtechnische Bauteil einströmt, flexibel bei Bedarf während der Herstellung bereitzustellen, wobei keine zusätzlichen Bauteile, wie beispielsweise Klipse oder Schrauben, erforderlich sind.

In dem Verfahren der Erfindung ist das stoffschlüssige Verbindungsverfahren ein Ultraschall-Schweißverfahren.

Durch den Einsatz des Ultraschall-Schweißverfahrens ist kein zusätzliches Verbindungsmaterial, wie beispielsweise ein Klebstoff erforderlich. Außerdem kann das fluidtechnische Bauteil ohne lange Wartezeiten, beispielsweise für ein Aushärten des Klebstoffs, weiterverarbeitet werden.

Das Verfahren der Erfindung enthält den Schritt eines automatischen Zuführens des Filtermaterials in einer geeigneten Form und Größe.

Aufgrund dieses Schritts ist es möglich, ein geeignetes Filtermaterial ohne großen Aufwand schnell bereitzustellen.

In dem Verfahren laut Erfindung werden die geeignete Form und Größe des Filtermaterials durch Stanzen erzeugt und das Stanzen wird mittels eines entsprechend ausgestatteten Schweißwerkzeugs für das Ultraschall-Schweißverfahren ausgeführt.

Wenn das Stanzen mittels des Schweißwerkzeugs für das Ultraschall-Schweißverfahren ausgeführt wird, ist kein zusätzliches Werkzeug erforderlich, um das Stanzen auszuführen, was wiederum Investitionskosten verringert.

In einer vorteilhaften Ausgestaltung des Verfahrens ist das Verbinden des Filtermaterials mit einem Gehäuseteil des fluidtechnischen Bauteils ein Schritt eines Montagevorgangs des fluidtechnischen Bauteils in eine übergeordnete Baugruppe.

In dieser Ausgestaltung ist es möglich, das fluidtechnische Bauteil erst während des Montagevorgangs in die übergeordnete Baugruppe mit speziellen Eigenschaften zu versehen, was einem früheren Zeitpunkt zu einem erhöhten Fertigungs- und Verwaltungsaufwand führen würde.

In einer vorteilhaften Ausgestaltung des Verfahrens wird das Filtermaterial mit einer funktionalen Komponente des fluidtechnischen Bauteils verbunden, und das Verbinden erfolgt als Schritt eines Montagevorgangs, insbesondere während einer Endmontage, in dem die funktionale Komponente in das fluidtechnische Bauteil montiert wird.

Bei dieser Ausgestaltung ist es möglich, lediglich die funktionale Komponente, die für eine spezielle Funktion in dem fluidtechnischen Bauteil verwendet wird und somit ohnehin vorhanden ist, aus einem für die stoffschlüssige Verbindung geeigneten Material auszubilden und die Vorteile der Flexibilität und eines Einsparens von zusätzlichen Bauteilen zum Verbinden des Filtermaterials bereitzustellen.

In einer weiteren vorteilhaften Ausgestaltung des Verfahrens wird das fluidtechnische Bauteil je nach Einsatzzweck mit oder ohne das Filtermaterial ausgestattet und die funktionale Komponente wird mit dem damit verbundenen Filtermaterial in Abhängigkeit von einer Verwendung des fluidtechnischen Bauteils in dem fluidtechnischen Bauteil montiert.

Dadurch kann flexibel auf eine tatsächliche Verwendung des fluidtechnischen Bauteils reagiert werden, so dass eine entsprechend mit dem Filtermaterial ausgestattete funktionale Komponente nur bei Bedarf montiert wird. Dies kann günstigerweise im Rahmen der Endmontage erfolgen.

In einer weiteren vorteilhaften Ausgestaltung des Verfahrens ist das fluidtechnische Bauteil ein Ventil, und eine Verwendung des Ventils ist eine Verwendung als ein Einlassventil oder ein Auslassventil, wobei die funktionale Komponente mit dem damit verbundenen Filtermaterial montiert wird, wenn das Ventil als Einlassventil verwendet wird.

In diesem speziellen Beispiel kann lediglich durch eine Montage der funktionalen Komponente mit einer bestimmten Ausprägung, nämlich ob das Filtermaterial daran vorhanden ist oder nicht, bestimmt werden, ob das Ventil als das Einlassventil oder das Auslassventil eingesetzt wird.

In einer weiteren vorteilhaften Ausgestaltung des Verfahrens ist die funktionale Komponente eine Düse.

Durch die Düse als die funktionale Komponente kann das Fluid auf Grund einer Position der Düse beim Eintritt des Fluids in das Ventil gefiltert werden.

Gemäß einem weiteren Aspekt der Erfindung wird ein System aus einem fluidtechnischen Bauteil und einem damit verbundenen Filtermaterial bereit gestellt, wobei das Filtermaterial ausgebildet ist, mittels einer stoffschlüssigen Verbindung mit dem fluidtechnischen Bauteil verbunden zu sein.

Durch das System aus dem fluidtechnischen Bauteil und dem damit mittels der stoffschlüssigen Verbindung verbundenen Filtermaterial, bestehe die Möglichkeit die Filterung des Fluids, das in das fluidtechnische Bauteil einströmt, flexibel bei Bedarf bereitzustellen, wobei keine zusätzlichen Bauteile, wie beispielsweise Klipse oder Schrauben, erforderlich sind.

Gemäß einer vorteilhaften Ausgestaltung des Systems ist das fluidtechnische Bauteil ein Ventil.

In dieser Ausgestaltung kann das Ventil flexibel bereitgestellt werden, so dass es nicht erforderlich ist, mehrere Ventile von unterschiedlichen Typen mit dem entsprechenden Bereitstellungsaufwand bereitzustellen.

Gemäß einer weiteren vorteilhaften Ausgestaltung des Systems ist das Filtermaterial ausgebildet, mit einer funktionalen Komponente des fluidtechnischen Bauteils, das ausgebildet ist, in einer Abhängigkeit von einer Verwendung des fluidtechnischen Bauteils montiert zu sein, verbunden zu sein.

Hierbei kann ein grundsätzlich für mehrere Anwendungsfälle verwendbares Ventil lediglich durch ein Vorsehen der funktionalen Komponente mit dem daran angebrachten Filtermaterial für eine bestimmte Verwendung, nämlich als das Einlassventil, ausgebildet sein.

In einer weiteren vorteilhaften Ausgestaltung des Systems ist die funktionale Komponente eine Düse.

Da die Düse in unterschiedlichen Ausführungsformen, nämlich in Abhängigkeit von der Verwendung des fluidtechnischen Bauteils, nämlich um als das Einlassventil oder das Auslassventil verwendet zu werden, mit oder ohne das Filtermaterial verwendet wird, ist die Düse als die funktionale Komponente, um das Filtermaterial flexibel bereitzustellen, besonders geeignet.

Gemäß einer weiteren vorteilhaften Ausgestaltung des Systems ist die Düse eine in einer Eingangsöffnung des fluidtechnischen Bauteils eingebrachte Zuluftdüse.

Bei dem Verbinden des Filtermaterials mit der Zuluftdüse kann das in das fluidtechnische Bauteil strömende Fluid in einer einfach bereitgestellten Weise gefiltert werden.

Die Erfindung wird nun anhand von Ausführungsbeispielen anhand von beigefügten Zeichnungen erläutert.

Insbesondere zeigt:
- Fig. 1: eine teilweise geschnittene prinzipielle Darstellung eines erfindungsgemäßen Systems, das ein fluidtechnisches Bauteil und ein Filtermaterial aufweist;
- Fig. 2: eine teilweise geschnittene prinzipielle Darstellung des fluidtechnischen Bauteils; und
- Fig. 3: eine prinzipielle Darstellung von Schritten eines stoffschlüssigen Verbindungsverfahrens.

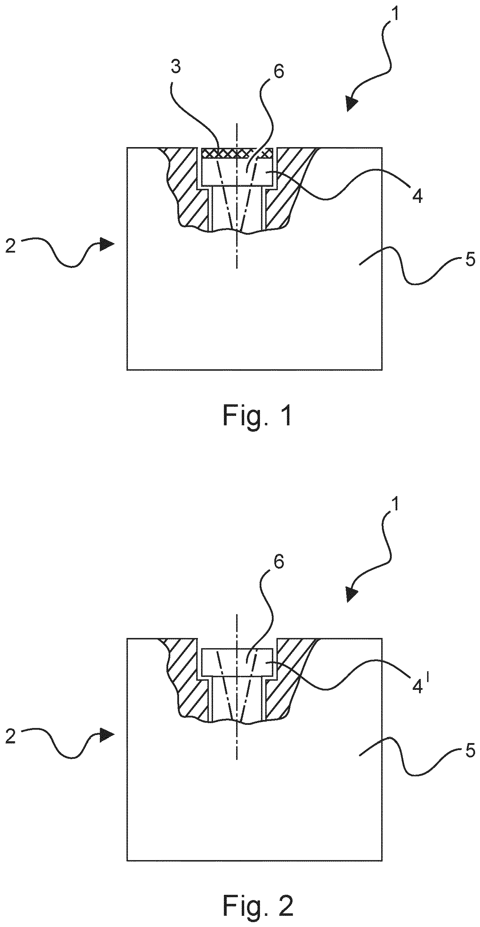

**Fig.** 1 zeigt eine teilweise geschnittene prinzipielle Darstellung eines erfindungsgemäßen Systems 1 aus einem Ventil 2 als ein fluidtechnisches Bauteil und einem Filtermaterial 3, das mit dem fluidtechnischen Bauteil verbunden ist.

Das System 1 weist ferner eine Düse 4 als eine funktionale Komponente des Systems 1 auf. Die funktionale Komponente wird für eine spezielle Funktion in dem fluidtechnischen Bauteil verwendet. Ferner weist das Ventil 2 einen Gehäusekörper 5 als eines von Gehäuseteilen, die funktionale Komponenten des Ventils 2 aufnehmen, auf.

Das Filtermaterial 3 weist eine Maschenweite auf, die für ein Ausfiltern von Partikeln geeignet ist, die eine Funktion des fluidtechnischen Bauteils stören. Das Filtermaterial 3 ist mit der Düse 4 mittels einer stoffschlüssigen Verbindung verbunden. Damit unterscheidet sich diese Verbindung von zwei Bauteilen von einer integralen Herstellung der Düse 4 mit dem Filtermaterial 3. In dieser Ausführungsform ist die stoffschlüssige Verbindung eine Verbindung mittels eines Ultraschall-Schweißverfahrens. Die Düse 4 ist eine Zuluftdüse des Ventils 2, die mit dem Filtermaterial 3 versehen ist, um zugeführte Druckluft, die durch eine Öffnung 6 in der Düse 4 in das Ventil 2 strömt, zu filtern. Das Ventil 2 wird in dieser Ausführungsform als ein Einlassventil verwendet.

In einer alternativen Ausführungsform erfolgt die stoffschlüssige Verbindung mittels eines anderen Verbindungsprinzips, beispielsweise Kleben oder Löten. In weiteren alternativen Ausführungsformen ist das Filtermaterial 3 nicht mit der Düse 4 verbunden, sondern mit der fluidtechnischen Bauteil selbst, beispielsweise mit einem der Gehäuseteile des Ventils 2, oder mit einer anderen funktionalen Komponente. Weiterhin ist alternativ das Fluid nicht Druckluft, sondern beispielsweise ein anderes Gas oder eine Flüssigkeit.

Fig. 2 zeigt eine teilweise geschnittene prinzipielle Darstellung des Ventils 2 als das fluidtechnische Bauteil.

Eine Düse 4' ist in dem in Fig. 2 gezeigten fluidtechnischen Bauteil nicht mit einem Filtermaterial versehen, sondern weist lediglich die Öffnung 6 auf, durch die Druckluft strömen kann. Die Düse 4' ist an demselben Zugang zu dem Ventil 2 wie die Düse 4 montiert. Das in Fig. 2 gezeigte Ventil 2 wird als ein Auslassventil verwendet, wobei das Filtermaterial nicht eingesetzt wird, um ein Abströmen des Fluids nicht zu behindern und ggf. doch in dem Fluid in dem Ventil 2 enthaltene Fremdkörper ungehindert ausströmen zu lassen. Das in Fig. 2 gezeigte Ventil 2 ist also keine Ausführungsform der Erfindung, sondern dient lediglich zur Erläuterung für die Möglichkeiten des beanspruchten Verfahrens und des beanspruchten Systems.

Die in Fig. 1 gezeigte Düse 4 und die in Fig. 2 gezeigte Düse 4' werden also in Abhängigkeit von einer Verwendung des fluidtechnischen Bauteils montiert.

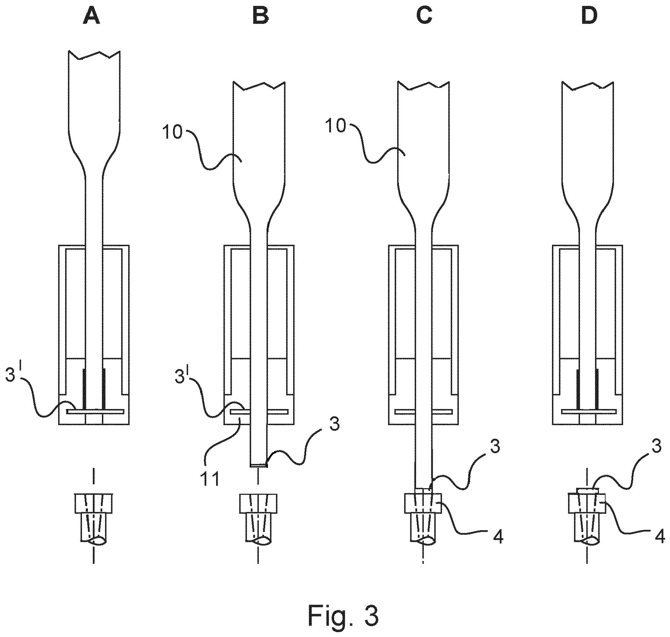

**Fig. 3** zeigt eine prinzipielle Darstellung von Schritten von einem Zyklus eines stoffschlüssigen Verbindungsverfahrens mittels dessen das Filtermaterial 3 mit dem fluidtechnischen Bauteil verbunden wird. Fig. 3 enthält vier Darstellungen 3A, 3B, 3C und 3D in denen einzelne Schritte des Verfahrens dargestellt werden.

Das Verbindungsverfahren ist in der in Fig. 3 gezeigten Ausführungsform das Ultraschall-Schweißverfahren, um das in Fig. 1 gezeigte Filtermaterial 3 mit der Düse 4 zu verbinden, kann aber, wie o.a. alternativ auch ein anderes stoffschlüssiges Verbindungsverfahren sein.

Das Filtermaterial 3 wird, wie in **Fig. 3A** dargestellt, als ein Band 3' bereitgestellt, das automatisch zugeführt wird. Dazu ist das Band 3' auf einer Spule aufgewickelt und wird nach Bedarf eine erforderliche Länge entsprechend einer erforderlichen Länge zugeführt. Alternativ wird ist das Filtermaterial 3 nicht als Band 3' bereitgestellt, sondern beispielsweise in Form einer Platte, die dann von Hand zugeführt wird, oder das Band 3' wird in einer anderen Form als auf der Spule bereitgestellt.

**Fig. 3B** zeigt einen Zustand in einem Schritt unmittelbar nachdem das Filtermaterial 3 mittels einer Sonotrode als das Schweißwerkzeug 10 aus dem Band 3' ausgestanzt wurde. Bei dem Ausstanzen wird eine geeignete Form und Größe des Filtermaterials 3 erzeugt. Dazu weist eine Ultraschall-Schweißeinrichtung eine Matrize 11 in einer geeigneten Form und das Schweißwerkzeug 10 als einen Stanzstempel in einer komplementären Form auf.

In einer alternativen Ausführungsform wird die das Filtermaterial 3 in der geeigneten Form und Größe nicht durch Stanzen bereitgestellt, sondern wird bereits in der geeigneten Form und Größe vorbereitet zugeführt.

**Fig. 3C** zeigt einen Schritt eines eigentlichen Verbindens. In dem Ultraschall-Schweißverfahren wird die Sonotrode als das Schweißwerkzeug 10 verwendet, in die eine hochfrequente Schwingung, nämlich eine Ultraschallschwingung eingeleitet wird, die wiederum auf das Filtermaterial 3 und die Düse 4 übertragen wird. Dazu wird neben der Ultraschallschwingung eine Druckkraft auf die Sonotrode aufgebracht. Durch die übertragene Ultraschallschwingung werden das Filtermaterial 3 und ein Material der Düse 4 plastifiziert und dann verschweißt, und somit verbunden.

In **Fig. 3D** ist der Zustand nach dem Verbinden des Filtermaterials 3 mit der Düse 4 gezeigt.

Im Gebrauch wird das Filtermaterial 3 mittels des Bands 3' automatisch zugeführt, so dass das Filtermaterial 3 in der erforderlichen Form und Größe ausgestanzt werden kann. Im Anschluss daran bewegt sich das Schweißwerkzeug 10, in der dargestellten Ausführungsform nach unten, um das Filtermaterial 3 aus dem Band 3' auszustanzen. Das Stanzwerkzeug 10 bewegt sich weiter in Richtung der Düse 4 und bei einem Auftreffen des Stanzwerkzeugs 10 mit dem ausgestanzten Filtermaterial 3 wird die Ultraschallschwingung von dem Stanzwerkzeug 10 über das Filtermaterial 3 auf die Düse 4 übertragen, wodurch das Filtermaterial 3 und ein Material der Düse 4 plastifiziert werden. Wie insbesondere in den Darstellungen 3B und 3C gezeigt, werden das Stanzen und das Schweißen in einem einzigen Arbeitshub durchgeführt. Nach dem beanspruchten Verfahren werden diese beiden Arbeitsgänge in mehreren Arbeitshüben durchgeführt. Nach einem Abkühlen der Materialien ist eine stoffschlüssige Verbindung entstanden.

Das Verbinden des Filtermaterials 3 mit der Düse 4 erfolgt als ein Schritt eines Montagevorgangs, in dem die funktionale Komponente in das fluidtechnische Bauteil montiert wird, also die Düse 4 in das Ventil 2 montiert wird.

In einem weiteren Verlauf des Montagevorgangs wird die Düse 4 mit dem damit verbundenen Filtermaterial 3 in dem Ventil 2 montiert. Dies erfolgt dann, wenn das Ventil 2 als das Einlassventil verwendet wird.

In dem Fall, in dem das Ventil 2 als das Auslassventil verwendet wird, wird die Düse 4' ohne das Filtermaterial 3 montiert. Die Düse 4, 4' wird also in Abhängigkeit von der Verwendung des fluidtechnische Bauteils in dem fluidtechnischen Bauteil montiert.

In einer alternativen Ausführung, in der nicht die Düse 4, sondern ein Gehäuseteil des Ventils 2, beispielsweise der Gehäusekörper 5, mit dem Filtermaterial 3 verbunden wird, erfolgt dieses als Schritt in einem Montagevorgang, in dem das fluidtechnische Bauteil in eine übergeordnete Baugruppe montiert wird.

### BEZUGSZEICHENLISTE

- 1: System
- 2: Ventil
- 3: Filtermaterial
- 4, 4': Düse
- 5: Gehäusekörper
- 6: Öffnung

- 10: Schweißwerkzeug
- 11: Matrize

## Patentansprüche

1. Verfahren zum Verbinden eines Filtermaterials (3) mit einem fluidtechnischen Bauteil,
wobei es den Schritt aufweist:
stoffschlüssiges Verbinden des Filtermaterials (3) mit dem fluidtechnischen Bauteil mittels eines stoffschlüssigen Verbindungsverfahrens,
wobei
das Filtermaterial (3) mit einer funktionalen Komponente des fluidtechnischen Bauteils stoffschlüssig verbunden wird,
das Verbinden als Schritt eines Montagevorgangs, in dem die funktionale Komponente in das fluidtechnische Bauteil montiert wird, erfolgt,
das fluidtechnische Bauteil ein Ventil (2) ist,
die funktionale Komponente eine Düse (4) ist,
das stoffschlüssige Verbindungsverfahren ein Ultraschall-Schweißverfahren ist,
ein Erzeugen der geeigneten Form und Größe des Filtermaterials (3) durch Stanzen erfolgt,
das Stanzen mittels eines Schweißwerkzeugs (10) für das Ultraschall-Schweißverfahren ausgeführt wird, und
das Stanzen und ein Schweißen des Ultraschall-Schweißverfahrens in einem einzigen Arbeitshub des Schweißwerkzeugs (10) ausgeführt werden,
**dadurch gekennzeichnet, dass**
das Filtermaterial (3) mittels eines Bands (3') automatisch zugeführt wird, und
das Schweißwerkzeug (10) sich im Anschluss daran bewegt, um das Filtermaterial (3) aus dem Band (3') auszustanzen, und sich dann weiter in Richtung der Düse (4) bewegt und bei einem Auftreffen des Stanzwerkzeugs (10) mit dem ausgestanzten Filtermaterial (3) eine Ultraschallschwingung von dem Stanzwerkzeug über das Filtermaterial (3) auf die Düse (4) übertragen wird, wodurch das Filtermaterial (3) und ein Material der Düse (4) plastifiziert werden.

2. Verfahren gemäß Anspruch 1, wobei
das Verbinden des Filtermaterials (3) mit einem Gehäuseteil des fluidtechnischen Bauteils ein Schritt eines Montagevorgangs des fluidtechnischen Bauteils in eine übergeordnete Baugruppe ist.

## Claims

1. Method for connecting a filter material (3) to a fluidic component,
wherein it comprises the step of:
materially bonding the filter material (3) to the fluidic component by means of a material bonding process,
wherein
the filter material (3) is joined to a functional component of the fluidic component by a material bonding process,
the connection is performed as a step of an assembly process in which the functional component is mounted in the fluidic component,
the fluidic component is a valve (2),
the functional component is a nozzle (4),
the material bonding process is an ultrasonic welding process,
the suitable shape and size of the filter material (3) is created by punching,
the punching is carried out by means of a welding tool (10) for the ultrasonic welding process, and
the punching and welding of the ultrasonic welding process are carried out in a single working stroke of the welding tool (10),
**characterized in that,**
the filter material (3) is supplied automatically by means of a band (3'), and
the welding tool (10) subsequently moves in order to punch the filter material (3) out of the band (3') and then moves further in the direction of the nozzle (4) and when the punching tool (10) strikes the punched out filter material (3) an ultrasonic vibration is transmitted from the punching tool via the filter material (3) to the nozzle (4), whereby the filter material (3) and a material of the nozzle (4) are plasticized.

2. Method according to claim 1, wherein
connecting the filter material (3) to a housing part of the fluidic component is a step in the assembly process of the fluidic component into a higher-level assembly unit.

## Revendications

1. Procédé de liaison d'un matériau filtrant (3) avec un composant fluidique,
dans lequel il présente l'étape suivante :
la liaison par complémentarité de matière du matériau filtrant (3) avec le composant fluidique au moyen d'un procédé de liaison par complémentarité de matière,
dans lequel
le matériau filtrant (3) est relié par complémentarité de matière à un composant fonctionnel du composant fluidique,
la liaison est effectuée comme étape d'un processus de montage, dans lequel le composant fonctionnel est monté dans le composant fluidique,
le composant fluidique est une soupape (2),
le composant fonctionnel est une buse (4),
le procédé de liaison par complémentarité de matière est un procédé de soudage par ultrasons,
une génération de la forme et de la grandeur appropriées du matériau filtrant (3) est effectuée par estampage,
l'estampage est réalisé au moyen d'un outil de soudage (10) pour le procédé de soudage par ultrasons, et
l'estampage et un soudage du procédé de soudage par ultrasons sont réalisés dans une course de travail unique de l'outil de soudage (10),
**caractérisé en ce que**
le matériau filtrant (3) est automatiquement amené au moyen d'une bande (3'), et
l'outil de soudage (10) se déplace ensuite afin d'estamper le matériau filtrant (3) hors de la bande (3'), et se déplace davantage en direction de la buse (4) et lorsque l'outil d'estampage (10) frappe le matériau filtrant (3) estampé, une vibration ultrasonique est transmise de l'outil d'estampage par le biais du matériau filtrant (3) à la buse (4), moyennant quoi le matériau filtrant (3) et un matériau de la buse (4) sont plastifiés.

2. Procédé selon la revendication 1, dans lequel
la liaison du matériau filtrant (3) avec une partie formant boîtier du composant fluidique est une étape d'un processus de montage du composant fluidique dans un assemblage supérieur.
